# EUROPÄISCHE PATENTSCHRIFT

(11) **EP 1 432 742 B1**
(45) Veröffentlichungstag und Bekanntmachung des Hinweises auf die Patenterteilung: **11.03.2009**
(21) Anmeldenummer: 02797660.4
(22) Anmeldetag: 31.08.2002
(51) Int. Cl.: C08F 8/28

(54) **VERFAHREN ZUR HERSTELLUNG HOCHMOLEKULARER, VERNETZTER POLYVINYLBUTYRALE**
METHOD FOR THE PRODUCTION OF HIGH-MOLECULAR, CROSSLINKED POLYVINYL BUTYRALS
PROCEDE DE PRODUCTION DE BUTYRALS DE POLYVINYLE RETICULES A HAUT POIDS MOLECULAIRE

(30) Priorität: 04.09.2001 DE 10143190
(43) Veröffentlichungstag der Anmeldung: 30.06.2004
(73) Patentinhaber: Kuraray Europe GmbH, 65926 Frankfurt am Main (DE)
(72) Erfinder: PAPENFUHS, Bernd, 63179 Obertshausen (DE); STEUER, Martin, 65835 Liederbach (DE); JONAS, Simon, 65795 Hattersheim (DE)
(74) Vertreter: Kisters, Michael Marcus
(86) Internationale Anmeldenummer: PCT/EP2002/009743
(87) Internationale Veröffentlichungsnummer: WO 2003/020776

(56) Entgegenhaltungen:
- EP-A- 0 024 055
- EP-A- 0 211 818
- EP-A- 0 211 819
- EP-A- 0 283 180
- DE-A- 2 752 054
- DE-A- 19 717 395
- DE-C- 888 008
- US-A- 5 332 774

## Beschreibung

Die vorliegende Erfindung betrifft ein Verfahren zur Herstellung hochmolekularer, vernetzter Polyvinylbutyrale.

Bekannt ist, Polyvinylbutyrale zusammen mit Weichmachern durch Extrusion zu Folien zu verarbeiten, die insbesondere in Verbundsicherheitsgläsern eingesetzt werden.

Zur Erhöhung des Molekulargewichts solcher Polyvinylbutyrale wird in der EP-A-0 211 818 vorgeschlagen, sie durch stabile, intermolekulare Diacetalverknüpfungen, zu vernetzen. Die Vernetzung erfolgt dabei durch Aldehyde mit mindestens zwei Aldehydgruppen. Das Vernetzungsmittel wird dabei vor oder während der Acetalisierung der Polyvinylalkohole mit Butyraldehyd zugegeben.

Die Vernetzung von Polyvinylbutyralen mit Dialdehyden führt jedoch aufgrund der hohen Reaktivität der Aldehyde zu stark vernetzten, sehr hochmolekularen und daher teilweise unlöslichen Polyvinylbutyralen. Darüber hinaus ist die Vernetzungsreaktion aufgrund der geringen Selektivität nur schwer kontrollierbar, wodurch die Herstellung reproduzierbarer Produktqualitäten sehr schwierig ist.

In der DE-A-100 18 517 wird vorgeschlagen, Diester, insbesondere der Oxalsäure, für die Vernetzung von Polyvinylbutyralen einzusetzen. Auf diese Weise können höhermolekulare Produkte mit sehr guter Reproduzierbarkeit hergestellt werden. Nachteilig ist jedoch die Notwendigkeit, dass das Vernetzungsreagenz als Additiv vor der Folienextrusion zugegeben werden muss. Hierdurch ergeben sich wegen der Zweiphasigkeit des Systems Homogenisierungsprobleme, die eine effektive Vormischung als zusätzlichen Verfahrensschritt erforderlich machen. Außerdem bedeutet die Notwendigkeit der Zugabe eines Vernetzers eine mögliche Fehlerquelle für den Folien-Hersteller, da Wäge- und Dosierfehler nie völlig auszuschließen sind. Ein weiterer Nachteil ist die Freisetzung von bei der Umesterung entstehenden niedermolekularen Alkoholen, die unter Umständen zu höheren, betrieblichen Sicherheitsauflagen führen können.

Ein weiterer Nachteil bei dieser Vorgehensweise besteht darin, dass die im Stand der Technik besonders bevorzugte und daher zunehmende Verwendung von zweiwertige Kationen, insbesondere Mg(II)-Ionen, enthaltender Antihaftmittel zusammen mit den Diestern bei der Herstellung der vernetzten Polyvinylbutyrale zu einer komplexierenden Wechselwirkung zwischen Antihaft- und Vernetzungsmittel und auf diese Weise zu einer Aufhebung der haftungsreduzierenden Wirkung des Antihaftmittels führt. Ein weiterer Nachteil besteht darin, dass infolge der komplexierenden Wechselwirkung zwischen Antihaft- und Vernetzungsmittel die Vernetzungsreaktion weniger effektiv abläuft.

Im Stand der Technik ist auch bekannt, Polyvinylbutyrale in Beschichtungsanwendungen durch Vernetzungsreagenzien zu vernetzen, deren funktionelle Gruppen mit den OH-Gruppen des Polyvinylbutyrals chemische Bindungen eingehen können. Beispiele für derartige Vernetzungsreagenzien sind Phenol-Formaldehydharze, polyfunktionelle Aldehyde, polyfunktionelle Epoxide, Epoxidharze, Melaminharze und polyfunktionelle Isocyanate. Eine Übersicht über Verbindungen, die zur Vernetzung von Polyvinylbutyralen eingesetzt werden können, gibt z.B. die Produktbroschüre "Mowital", Ausgabe August 1997, der Clariant GmbH. Nachteilig ist auch hier die Notwendigkeit der Zugabe eines Vernetzers. Nachteilig ist darüber hinaus, dass Polyvinylbutyral nicht mit allen Vernetzungsreagenzien verträglich ist, wodurch deren Einsatzmöglichkeiten eingeschränkt sind.

Ebenfalls bezüglich Beschichtungsanwendungen ist aus der DE-A-27 52 054 bekannt, dass wässrige Polyvinylbutyraldispersionen zur Verminderung der Menge an notwendiger Phosphorsäure und zum Erreichen eines pH-Wertes unterhalb von 2 auch Aldehydsäuren enthalten können. Eine Vernetzung des Polyvinylbutyrals wird jedoch nicht beschrieben.

In der US-A-4 357 402 wird offenbart, dass sich acetal-gebundene Glyoxylsäure zwar als Katalysator für die Vernetzung von Polyvinylalkohol eignet, dass aber für die eigentliche Vernetzung Dialdehyde vorhanden sein müssen. Eine Vernetzung von Polyvinylalkohol-Fragmenten des Polyvinylbutyrals mittels coacetalisierter Glyoxylsäure wird nicht beschrieben.

Der vorliegenden Erfindung lag somit die Aufgabe zugrunde, ein Verfahren zur Herstellung hochmolekularer Polyvinylbutyrale zur Verfugung zu stellen, die sich unter hoher Reproduzierbarkeit und ohne Zusatz eines separaten Vernetzungsreagenzes herstellen lassen und sich für die Herstellung von Produkten, wie z.B..Folien und Beschichtungen, eignen.

Eine weitere Aufgabe war darin zu erblicken, hochmolekulare, vernetzte Polyvinylbutyrale anzugeben, welche bei der Herstellung mit den in der Technik üblichen zweiwertige Kationen, insbesondere Mg(II)-Ionen, enthaltenen Antihaftmitteln ausgerüstet werden können. Weiterhin wird bei Verwendung derartiger Polyvinylbutyrale die Vernetzungsreaktion durch zweiwertige Kationen, insbesondere Mg(II)-Ionen, nicht behindert.

Überraschenderweise wurde gefunden, dass Polyvinylbutyrale, die geringe Mengen coacetalisierter, säurefunktionalisierter Aldehyde enthalten, thermoplastisch vernetzbar sind, ohne dass es des Zusatzes separater Vernetzungsmittel bedarf. Diese können bei der Herstellung mit zweiwertigen Kationen, insbesondere Mg(II)-Ionen, enthaltenden Antihafmitteln ausgerüstet werden, ohne die haftungsreduzierende Wirkung dieser Antihaftmittel zu verringern.

Gegenstand der vorliegenden Erfindung ist somit ein Verfahren zur Herstellung eines vernetzten Polyvinylbutyrals, dadurch gekennzeichnet, dass ein Polyvinylbutyral welches coacetalisierte, säurefunktionalisierte Aldehyde enthält, gegebenenfalls zusammen mit mindestens einem Weichmacher, bei Massetemperaturen im Bereich von 80 bis 280°C in einem Extruder thermisch vernetzt wird.

Im Rahmen der vorliegenden Erfindung bezeichnen Polyvinylbutyrale Polyvinylacetale, deren überwiegender molarer Gehalt an Acetaleinheiten, vorzugsweise mehr als 50 mol-%, sich von Butyraldehyd ableiten.

Die Herstellung von Polyvinylbutyralen, die coacetalisierte Glyoxylsäure enthalten, ist bekannt und wird zum Beispiel in der DE-A-27 52 054 für andere Anwendungen beschrieben.

Die erfindungsgemäß hergestellten vernetzten Polyvinylbutyrale weisen somit die folgende Struktureinheit auf: 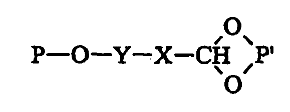 in der
- P und P' gleiche oder verschiedene Polyvinylbutyral-Ketten,
- X eine Bindung oder einen zweiwertigen aliphatischen oder aromatischen, linearen oder verzweigten, organischen Rest, vorzugsweise mit 1 bis 12 Kohlenstoffatomen, und
- Y ein Fragment der Sauerstoffsäuren des Kohlenstoffs, des Schwefels oder des Phosphors, darstellen.

Das cyclische Acetal ist dabei vorzugsweise ein aus 1.3- bzw. 1.2-Diol-Einheiten gebildeter Sechs- bzw. Fünfring.

X ist besonders bevorzugt eine Bindung oder ein zweiwertiger, aliphatischer, linearer oder verzweigter, organischer Rest mit 1 bis 6 Kohlenstoffatomen. Insbesondere ist X eine Bindung.

Das Fragment Y ist vorzugsweise CO, SO₃, SO₂, SO, PO₃H, PO₂H oder POH.

Besonders bevorzugt sind vernetzte Polyvinylbutyrale der folgenden Struktureinheit: 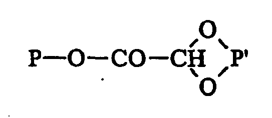 in der
- P und P' gleiche oder verschiedene Polyvinylbutyral-Ketten darstellen.

Als Ausgangsmaterialien können alle dem Fachmann bekannten Polyvinylbutyrale, die coacetalisierte, säurefunktionalisierte Aldehyde, vorzugsweise carboxylgruppenhaltige Aldehyde und besonders bevorzugt Glyoxylsäure enthalten, und somit zur Veresterung fähig sind, eingesetzt werden. Die für deren Synthese verwendeten Polyvinylalkohole sind hinsichtlich ihres Molekulargewichtes in keinster Weise beschränkt. Bevorzugt werden jedoch Polyvinylalkohole mit einem Molekulargewicht von mindestens 20 000 g/mol (Gewichtsmittel) eingesetzt.

Der Gehalt an säurefunktionalisierten Acetal-Einheiten, bezogen auf den Gesamtgehalt des zu vernetzenden Polymeren, liegt dabei vorzugsweise im Bereich von 0,01 bis 10,0 Gew.-%, besonders bevorzugt im Bereich von 0,01 bis 5,0 Gew.-% und insbesondere im Bereich von 0,1 bis 2,0 Gew.-%.

Die erfindungsgemäß hergestellten, hochmolekularen, vernetzten Polyvinylbutyrate enthalten Weichmacher. Als Weichmacher können dabei alle dem Fachmann bekannten Weichmacher eingesetzt werden. Der Weichmacher wird dabei in üblichen Mengen eingesetzt, die dem Fachmann bekannt sind. Bekannte Weichmacher für Polyvinylbutyrale sind dabei die Ester aliphatischer Mono- und Dicarbonsäuren mit ein- oder mehrwertigen-Alkoholen bzw. Oligoalkylen-Glykolethem, Phosphorsäureester sowie verschiedene Phthalate, wie sie zum Beispiel in der US-A-5 137 954 offenbart werden. Vorzugsweise eingesetzt werden jedoch die Diester von Di-, Tri- und Tetraethylenglykolen mit aliphatischen Monocarbonsäuren, Adipinsäure-Dialkylester sowie die in der nicht-vorveröffentlichten DE-A-101 00 681 beschriebenen Dibenzoate von Alkylen- und Polyalkylenglykolen.

Die thermische Vernetzung erfolgt im Extruder. Die Vernetzung ist dabei erkennbar an dem im Vergleich zum unvernetzten Polyvinylbutyral höheren Molekulargewicht des vernetzten Polyvinylbutyrals.

Mittels produzierten Extrusion lassen sich die erfindungsgemäß Polyvinylbutyrale in beliebiger Form herstellen. Bevorzugt ist jedoch die direkte Verarbeitung zu Folien, mit Hilfe von Breitschlitzdüsen. Ein bevorzugt hergestellter Gegenstand sind somit Folien. Verfahren zur Herstellung von Polyvinylbutyral-Folien sind dem Fachmann hinlänglich bekannt. Die Vernetzung der Folien ist dabei im Vergleich zu Folien aus Homoacetalen an einem erniedrigten Schmelzindex zu erkennen.

Die hergestellten Folien können dabei weitere, übliche Zusätze, wie z.B. Oxidationsstabilisatoren, UV-Stabilisatoren, Farbstoffe, Pigmente und/oder Antihaftmittel enthalten.

Aus den hergestellten Folien, die die hochmolekularen, vernetzten Polyvinylbutyrale enthalten, können gemäß dem Fachmann bekannten Verfahren Verbundsicherheitsgläser hergestellt werden.

Darüber hinaus können die hergestellten, hochmolekularen, vernetzten Polyvinylbutyrale Verwendung in Beschichtungen von Substraten finden.

Die Beschichtungen können dabei auf den unterschiedlichsten Substraten, wie z.B. Holz, Metall, Kunststoff, Glas, Textilien, Papier, Leder sowie keramischen und mineralischen Untergründen, appliziert werden.

Die Beschichtungen können dabei als weitere Bestandteile beispielsweise weitere Polymerharze, Weichmacher, Pigmente, Füllstoffe, Stabilisatoren, Haftungsverbesserer, rheologische Hilfsmittel, den pH-Wert beeinflussende Additive und Additive, die chemische Reaktionen sowohl zwischen dem erfindungsgemäß hergestellten hochmolekularen Polyvinylbutyral und anderen Polymerharzen als auch zwischen den anderen Polymerharzen untereinander katalysieren, enthalten.

Die folgenden Beispiele und Vergleichsbeispiele dienen zur Erläuterung der Erfindung.

### Mischung, Extrusion, Knetversuche.

Polyvinylacetale wurden vor der Extrusion oder Knetung mit Weichmacher gemischt. Die Mischung erfolgte in einem Labormischer (Hersteller: Brabender, Modell 826801). Im Weichmacher wurden vor Herstellung der Mischungen ggf. der UV-Stabilisator Tinuvin^{®} P (Hersteller: Ciba Specialty Chemicals) sowie ggf. eine bestimmte Menge Dimethyloxalat gelöst. In einigen Fällen wurde vor Mischung das Antihaftmittel Mg-2-ethylhexanoat als 30 %ige Lösung in Butylglykol dem Weichmacher zugegeben. Aus den PVB/Weichmacher-Mischungen wurden Flachfolien mit einer Dicke von 0.8 mm extrudiert. Die Extrusionen erfolgten auf einem Doppelschneckenextruder mit gegenlaufenden Schnecken (Hersteller: Haake, System Rheocord 90), ausgerüstet mit Schmelzepumpe und Breitschlitzdüse.

Die Knetversuche erfolgten mit einem Laborkneter (Hersteller: Haake) bei einer Temperatur von 210 °C und einer Drehzahl von 50 rpm.

### Schmelzindex

Die Folien wurden vor Messung des Schmelzindexes 24 h bei 23 °C und einer relativen Luftfeuchte von 50 % klimatisiert. Die Messung der Folien erfolgte mit einem Schmelzindex-Prüfgerät (Hersteller: Göttfert, Typ: MP-D) bei 190 °C mit einer Belastung von 2.16 kg unter Verwendung einer 2 mm-Düse gemäß ISO 1133.

### Kompressions-Schertest

Die Prüfkörper wurden wie folgt hergestellt: Die Folien wurden bei einem Klima von 23 °C/30% relativer Luftfeuchte für 24 h klimatisiert. Die Verlegung erfolgte auf 2 mm Floatglas in Feuer/Zinn-Orientierung der Folie zur Glasoberfläche. Das Glas wurde vor Belegung mit vollentsalztem Wasser gewaschen. Die Herstellung der Verbundglasscheiben erfolgte durch Verpressen der Verbunde im Vorverbundofen mit Kalanderwalzen bei Temperaturen zwischen 40°C und 100 °C gefolgt vom Verpressen der Verbunde in einem Autoklaven bei einem Druck von 12 bar und einer Temperatur von 140 °C für 30 min. Aus den Verbundgläsern werden für die Durchführung der Schertest-Prüfung je 10 Prüfkörper mit einer Größe von 25,4 x 25,4 mm geschnitten. Die Durchführung des Tests erfolgt gemäß DE 19643404 A1.

### Feuchte von PVB-Folien

Die Feuchte von PVB-Folie wurde an Verbunsicherheitsglas mit einem Infrarot-Photometer (Hersteller: Pier-Electronic GmbH, Wallau) gemessen. Das Messgerät wurde zuvor mit entsprechenden Eichstandards kalibriert.

### Molekulargewicht Mw

Die Bestimmung der Molekulargewichte Mw (= Gewichtsmittel) der in den Formmassen enthaltenen Polyvinylbutyrale erfolgte mittels Gelpermeationschromatographie (GPC) in Eisessig unter Verwendung von RI-Detektoren. Die Kalibrierung der Detektoren erfolgte mittels PVB-Eichstandards, deren Absolutwerte mittels statischer Lichtstreuung ermittelt wurden.

Im folgenden wird unter Coacetalgehalt der Gehalt an Acetalgruppen im Polymer verstanden, die durch die Acetalisierungsreaktion mit Glyoxylsäure entstanden sind.

Alle Konzentrationsangaben sind Gewichtsprozent.

Vergleichsbeispiel 1 und Beispiele 2 - 4 belegen den mit zunehmendem Coacetalgehalt zunehmenden Molekulargewichtsaufbau bei der Extrusion, erkennbar am abnehmenden Schmelzindex der Folien bei 190 °C. Die Ergebnisse sind gemäß Tabelle 1.

### Vergleichsbeispiel 1 (VB 1)

374,5 g PVB (Polyvinylalkoholgehalt = 20,5 %, Polyvinylacetatgehalt = 1,1 %, Mw = 105000 g/mol), 125,5 g Dihexyladipat (DHA) und 0,75 g Tinuvin P wurden gemischt und auf einem Doppelschneckenextruder mit gegenlaufenden Schnecken, ausgerüstet mit Schmelzepumpe und Breitschlitzdüse bei einer Massetemperatur von 190 °C zu Flachfolie mit einer Dicke von 0,8 mm extrudiert. An der erhaltenen Folie wurde der Schmelzindex bei 190°C (MFI 190) als Maß für den Molekulargewichtsautbau bestimmt. Der MFI 190 ist um so niedriger, je höher das Molekulargewicht des PVB nach der Extrusion ist.

### Beispiel 2 (B 2)

Es wurden 374,5 g PVB mit einem Polyvinylalkoholgehalt von 21,2 %, einem Polyvinylacetatgehalt von 1,17 %, einem Coacetalgehalt von 0,061 % und einem Mw von 106000 g/mol eingesetzt. Sonstige Formulierungsbestandteile und Durchführung wie Vergleichsbeispiel 1.

### Beispiel 3 (B 3)

Es wurden 374,5 g PVB mit einem Polyvinylalkoholgehalt von 20,7 %, einem Polyvinylacetatgehalt von 1,06 %, einem Coacetalgehalt von 0,61 % und einem Mw von 106000 g/mol eingesetzt. Sonstige Formulierungsbestandteile und Durchführung wie Vergleichsbeispiel 1.

### Beispiel 4 (B 4)

Es wurden 374,5 g PVB mit einem Polyvinylalkoholgehalt von 20,8 %, einem Polyvinylacetatgehalt von 1,09 %, einem Coacetalgehalt von 1,23 % und einem Mw von 106000 g/mol eingesetzt. Sonstige Formulierungsbestandteile und Durchführung wie Vergleichsbeispiel 1.

**Tabelle 1**

| | VB 1 | B 2 | B 3 | B 4 |
|---|---|---|---|---|
| Gehalt Coacetal aus Glyoxylsäure in Polymer [%] | 0 | 0,061 | 0,61 | 1,23 |
| MFI 190 [g/10 min] | 3,28 | 2,71 | 0,73 | 0,03 |

Vergleichsbeispiele 5, 7 und 9 sowie Beispiele 6, 8 und 10 belegen den Einfluss der Massetemperatur auf die Vernetzungsreaktion. Die Ergebnisse sind gemäß Tabelle 2. Die Vernetzungsreaktion wird durch steigende Massetemperatur begünstigt.

### Vergleichsbeispiel 5 (VB 5)

370 g PVB gemäß Vergleichsbeispiel 1, 130 g Triethylenglykol-di-n-heptansäureester (3G7) und 0,75 g Tinuvin P wurden gemäß Vergleichsbeispiel 1 bei einer Massetemperatur von 190 °C extrudiert. An der erhaltenen Folie wurde der MFI 190 bestimmt.

### Beispiel 6 (B 6)

Es wurden 370 g PVB mit einem Polyvinylalkoholgehalt von 20,1 %, einem Polyvinylacetatgehalt von 1,5 %, einem Coacetalgehalt von 0,61 % und einem Mw von 106000 g/mol eingesetzt. Sonstige Formulierungsbestandteile und Durchführung gemäß Vergleichsbeispiel 5.

### Vergleichsbeispiel 7 (VB 7)

Die Massetemperatur betrug 220 °C. Sonstige Parameter wie Vergleichsbeispiel 5.

### Beispiel 8 (B 8)

Es wurden 370 g PVB gemäß Beispiel 6 eingesetzt. Sonstige Formulierungsbestandteile und Durchführung gemäß Vergleichsbeispiel 7.

### Vergleichsbeispiel 9 (VB 9)

Die Massetemperatur betrug 240 °C. Sonstige Parameter wie Vergleichsbeispiel 5.

### Beispiel 10 (B 10)

Es wurden 370 g PVB gemäß Beispiel 6 eingesetzt. Sonstige Formulierungsbestandteile und Durchführung gemäß Vergleichsbeispiel 9.

**Tabelle 2**

| | VB 5 | B 6 | VB 7 | B 8 | VB 9 | B 10 |
|---|---|---|---|---|---|---|
| Gehalt Acetal aus Glyoxylsäure im Polymer [%] | 0 | 0,61 | 0 | 0,61 | 0 | 0,61 |
| Massetemperatur [°C] | 190 | 190 | 220 | 220 | 240 | 240 |
| MFI 190 [g/10 min] | 2,09 | 0,74 | 2,41 | 0,32 | 2,51 | 0,066 |

Vergleichsbeispiele 11 - 12 zeigen, dass bei Verwendung des Vernetzers Dimethyloxalat in Kombination mit Mg-Salzen die haftungssenkende Wirkung des Mg-Salzes aufgehoben wird, erkennbar am Anstieg des Schertest-Wertes. Beispiel 13 belegt, dass bei den erfindungsgemäßen Coacetalen in Kombination mit Mg-Salzen ein derartiger Effekt nicht auftritt. Die Ergebnisse sind gemäß Tabelle 3.

### Vergleichsbeispiel 11 (VB 11)

360 g PVB gemäß Vergleichsbeispiel 1, 140 g Triethlyenglykol-bis-2-ethylhexansäureester (3G8) und 0,2 g des Antihaftmittels Mg-2-ethylhexanoat wurden mit einem Extruder gemäß Vergleichsbeispiel 1 bei 220 °C Massetemperatur extrudiert. An der Folie wurden der MFI 190 und das Molekulargewicht PVB bestimmt. Die Folie wurde nach Klimatisierung auf 2 mm Floatglas laminiert. An den erhaltenen Verbunden wurde eine Haftungsprüfung (Schertest) durchgeführt.

### Vergleichsbeispiel 12 (VB 12)

Wie Vergleichsbeispiel 11. Zusätzlich wurden 0,856 g Dimethyloxalat eingesetzt.

### Beispiel 13 (B 13)

Es wurden 360 g PVB gemäß Beispiel 6 eingesetzt. Sonstige Formulierungsbestandteile und Durchführung gemäß Vergleichsbeispiel 11.

**Tabelle 3**

| | VB 11 | VB 12 | B 13 |
|---|---|---|---|
| Gehalt Acetal aus Glyoxylsäure im Polymer [%] | 0 | 0 | 0,61 |
| Gehalt Mg-Isooctanoat in Folie [%] | 0,04 | 0,04 | 0,04 |
| Gehalt Dimethyl-oxalat in Folie [%] | 0 | 0,178 | 0 |
| MFI 190 [g/10 min] | 3,24 | 2,68 | 0.68 |
| Mw PVB in Folie[g/mol] | 96200 | 102800 | 125200 |
| Schertest F/Sn [N/mm²] | 12,43 | 21,68 | 13,34 |

Vergleichsbeispiele 14 - 16 und Beispiele 17 - 18 belegen den Einfluss von Magnesiumsalzen auf die Vernetzungsreaktion bei Verwendung der vernetzend wirkenden Substanz Dimethyloxalat sowie bei Verwendung der erfindungsgemäßen Coacetale. Es ist erkennbar, dass bei Verwendung von Dimethyloxalat als Vernetzungsreagens die Vernetzungsreaktion bei Anwesenheit von Mg-Salzen deutlich weniger effektiv abläuft. Im Gegensatz dazu wird bei Verwendung der erfindungsgemäßen Coacetale die Vernetzungsreaktion durch Mg-Salze sogar gefördert.

Die Ergebnisse sind gemäß Tabelle 4.

### Vergleichsbeispiel 14 (VB 14)

37,45 g PVB gemäß Vergleichsbeispiel 1 und 12,55 g DHA wurden gemischt, in einen Kneter gegeben und bei einer Temperatur von 210°C für 5 min bei einer Umdrehungszahl von 50 rpm geknetet. An der erhaltenen Knetmasse wurde das Molekulargewicht Mw des enthaltenen Polyvinylbutyrals bestimmt.

### Vergleichsbeispiel 15 (VB 15)

Wie Vergleichsbeispiel 14. Zusätzlich wurden 0,089 g Dimethyloxalat eingesetzt.

### Vergleichsbeispiel 16 (VB 16)

Wie Vergleichsbeispiel 15. Zusätzlich wurden 0,0051 g des Antihaftmittels Mg-2-ethylhexanoat eingesetzt.

### Beispiel 17 (B 17)

Es wurden 37,45 g PVB gemäß Beispiel 6 eingesetzt. Sonstige Formulierungsbestandteile und Durchführung gemäß Vergleichsbeispiel 13.

### Beispiel 18 (B 18)

Wie Beispiel 17. Zusätzlich wurden 0,0051 g des Antihaftmittels Mg-2-ethylhexanoat eingesetzt.

**Tabelle 4**

| | VB 14 | VB 15 | VB 16 | B17 | B 18 |
|---|---|---|---|---|---|
| Gehalt Acetal aus Glyoxylsäure im Polymer [%] | 0 | 0 | 0 | 0,61 | 0,61 |
| Gehalt Mg-Iso-octanoat in Folie [%] | 0 | 0 | 0,01 | 0 | 0,01 |
| Gehalt Dimethyl-oxalat in Folie [%] | 0 | 0,178 | 0,178 | 0 | 0 |
| Mw PVB in Folie [g/mol] | 93700 | 107500 | 100550 | 108850 | 112700 |

## Patentansprüche

1. Verfahren zur Herstellung eines vernetzten Polyvinylbutyrals, **dadurch gekennzeichnet, dass** ein Polyvinylbutyral, welches coacetalisierte, säurefunktionalisierte Aldehyde enthält, bei Massetemperaturen im Bereich von 80 bis 280°C thermisch in einem Extruder vernetzt wird.

2. Verfahren gemäß Anspruch 1, **dadurch gekennzeichnet, dass** die thermische Vernetzung in Gegenwart mindestens eines Weichmachers durchgeführt wird.

3. Verfahren gemäß Anspruch 1 oder 2, **dadurch gekennzeichnet, dass** die säurefunktionalisierten Aldehyde carboxylgruppenhaltige Aldehyde enthalten.

4. Verfahren gemäß einem der Ansprüche 1 bis 3, **dadurch gekennzeichnet, dass** die säurefunktionalisierten Aldehyde Glyoxylsäure enthalten.

5. Verfahren gemäß mindestens einem der vorhergehenden Ansprüche, **dadurch gekennzeichnet, dass** der Gehalt an säurefunktionalisierten Acetal-Einheiten im Bereich von 0,01 bis 10,0 Gew.- %, bezogen auf den Gesamtgehalt des zu vernetzenden Polymeren, liegt.

## Claims

1. A method for the production of a crosslinked polyvinyl butyral, **characterized in that** a polyvinyl butyral containing co-acetalized, acid-functionalized aldehydes is thermally crosslinked in an extruder at melt temperatures in the range of 80 to 280 °C.

2. A method according to claim 1, **characterized in that** the thermal crosslinking is performed in the presence of at least one plasticizer.

3. A method according to claim 1 or claim 2, **characterized in that** the acid-functionalized aldehydes contain carboxyl group-containing aldehydes.

4. A method according to any one of claims 1 to 3, **characterized in that** the acid-functionalized aldehydes contain glyoxylic acid.

5. A method according to at least one of the preceding claims, **characterized in that** the content of acid-functionalized acetal units is in the range of 0.01 to 10.0% by weight, based on the total content of the polymer to be crosslinked.

## Revendications

1. Procédé de préparation d'un polyvinylbutyral réticulé, **caractérisé en ce qu'**un polyvinylbutyral contenant des aldéhydes, qui sont co-acétalisés et qui comportent des fonctions acide, est thermiquement réticulé dans une extrudeuse, les températures dans la masse étant comprises entre 80 et 280 °C.

2. Procédé selon la revendication 1, **caractérisé en ce que** la réticulation thermique est réalisée en présence d'au moins un plastifiant.

3. Procédé selon les revendications 1 ou 2, **caractérisé en ce que** les aldéhydes comportant des fonctions acide contiennent des aldéhydes renfermant des groupes carboxyle.

4. Procédé selon l'une des revendications 1 à 3, **caractérisé en ce que** les aldéhydes comportant des fonctions acide contiennent de l'acide glyoxylique.

5. Procédé selon au moins une des revendications précédentes, **caractérisé en ce que** la teneur en unités d'acétals comportant des fonctions acides est comprise entre 0,01 et 10,0 % en poids, par rapport à la teneur globale des polymères à réticuler.
